# EUROPEAN PATENT APPLICATION

(11) **EP 4 826 554 A1**
(43) Date of publication of application: **21.10.2026**
(21) Application number: 26169397.2
(22) Date of filing: 31.03.2026
(51) Int. Cl.: G06F 13/38, G06F 13/40, G06F 13/42, H04M 1/72412

(54) **OPERATING METHOD FOR WIRELESS USB INTERFACE EXTENDER AND WIRELESS USB INTERFACE EXTENDER USING THE SAME**

(30) Priority: 16.04.2025 TW 114114404
(71) Applicant: BenQ Corporation, Taipei 114 (TW)
(72) Inventor: WU, Chen-Chi, Taipei City 114 (TW); LIN, Cheng-Pu, Taipei City 114 (TW); YEN, Chao-Kuang, Taipei City 114 (TW); HUANG, Yu-Ping, Taipei City 114 (TW); CHIANG, Chin-Fu, Taipei City 114 (TW); JUAN, Cheng-Chieh, Taipei City 114 (TW)
(74) Representative: dompatent

(57) **Abstract**

An operating method for a wireless USB interface extender is provided. A primary wireless USB interface extender is electrically connected to a host. A first auxiliary wireless USB interface extender is coupled to a first USB device, and a second auxiliary wireless USB interface extender is coupled to a second USB device. When the primary wireless USB interface extender operates in an AP mode, the primary wireless USB interface extender communicates with the first and second auxiliary wireless USB interface extenders. When a USB device connection status display function of the primary wireless USB interface extender is activated, the host displays at least one of the connection statuses between the first USB device and the first auxiliary wireless USB interface extender and between the second USB device and the second auxiliary wireless USB interface extender.

## Description

### BACKGROUND OF THE INVENTION

### Field of the Invention

The invention relates in general to an operating method for a wireless USB interface extender and a wireless USB interface extender using the same.

### Description of the Related Art

Along with the advancement in computer technology and network communications, meetings conducted in conference rooms have increasingly adopted approaches that integrate computer technology and wireless network communication, thereby enhancing the convenience of meetings and incorporating a wider range of applicable functions. Through the use of wireless USB interface extenders, the microphone, speaker, and camera used in meetings can be flexibly configured, thereby enhancing the convenience of meetings conducted in conference rooms and improving meeting effectiveness. However, since current wireless USB interface extenders are not equipped with a function for indicating whether a microphone, speaker, or camera is successfully connected to the wireless USB interface extender, the user is unable to determine whether the microphone, speaker or camera has been successfully connected to the wireless USB interface extender and is available for use. This is indeed very inconvenient. Some wireless USB interface extenders are even located in areas that are difficult to see, thereby making it more difficult for a user to determine the connection statuses of the microphone, speaker and camera with the wireless USB interface extender based solely on the outward appearance of the devices.

Therefore, it has become an imminent task for the industries to provide a solution that enables the user to confirm the connection statuses of the microphone, speaker and camera with the wireless USB interface extenders quickly and conveniently before the meeting, so that the meeting can be conducted smoothly.

### SUMMARY OF THE INVENTION

According to one embodiment of the present invention, an operating method for a wireless USB interface extender is provided. The method includes the following steps. First, a primary wireless USB interface extender is provided, wherein the primary wireless USB interface extender is electrically connected to a host. Next, a first auxiliary wireless USB interface extender and a second auxiliary wireless USB interface extender are provided, wherein the first auxiliary wireless USB interface extender is coupled to a first USB device, and the second auxiliary wireless USB interface extender is coupled to a second USB device. Then, when the primary wireless USB interface extender operates in an access point (AP) mode, the primary wireless USB interface extender communicates with the first auxiliary wireless USB interface extender, and the primary wireless USB interface extender communicates with the second auxiliary wireless USB interface extender. When the first auxiliary wireless USB interface extender or the second auxiliary wireless USB interface extender operates in another AP mode, the first auxiliary wireless USB interface extender or the second auxiliary wireless USB interface extender communicates with the primary wireless USB interface extender, and the first auxiliary wireless USB interface extender or the second auxiliary wireless USB interface extender communicates with another primary wireless USB interface extender. When a USB device connection status display function of the primary wireless USB interface extender is activated, the primary wireless USB interface extender communicates with the host and causes the host to display at least one of the connection statuses between the first USB device and the first auxiliary wireless USB interface extender and between the second USB device and the second auxiliary wireless USB interface extender.

According to another embodiment of the present invention, a wireless USB interface extender is provided. The wireless USB interface extender includes a wireless transmission unit and a control unit. The control unit is configured to control the wireless transmission unit. The control unit is further configured to cause the wireless transmission unit to operate in an AP mode. The wireless USB interface extender is configured to be electrically connected to a host. When the wireless transmission unit operates in the AP mode, the wireless transmission unit communicates with a first auxiliary wireless USB interface extender, and the wireless transmission unit communicates with a second auxiliary wireless USB interface extender, wherein the first auxiliary wireless USB interface extender is coupled to a first USB device, and the second auxiliary wireless USB interface extender is coupled to a second USB device. When a USB device connection status display function of the wireless USB interface extender is activated, the control unit communicates with the host and causes the host to display at least one of the connection statuses between the first USB device and the first auxiliary wireless USB interface extender and between the second USB device and the second auxiliary wireless USB interface extender.

The above and other aspects of the invention will become better understood with regard to the following detailed description of the preferred but non-limiting embodiment (s). The following description is made with reference to the accompanying drawings.

### BRIEF DESCRIPTION OF THE DRAWINGS

FIG. 1 is a flowchart of an operating method for a wireless USB interface extender according to an embodiment of the disclosure.
FIG. 2 is a block diagram of a wireless projection system using the operating method for a wireless USB interface extender of FIG. 1 according to an embodiment of the disclosure.
FIG. 3 is a perspective view of a wireless USB interface extender according to an embodiment of the disclosure.
FIG. 4 shows an example of a frame being displayed on the screen of a host after the activation of the USB device connection status display function of the primary wireless USB interface extender.
FIG. 5 shows another example of a frame displayed on the screen of a host after the activation of the USB device connection status display function of the primary wireless USB interface extender.
FIG. 6 shows an alternate example of a frame being displayed on the screen of a host after the activation of the USB device connection status display function of the primary wireless USB interface extender.
FIG. 7 shows an alternate example of a frame displayed on the screen of a host after the activation of the USB device connection status display function of the primary wireless USB interface extender.
FIG. 8 shows an example of multiple image signals integrated and displayed on the screen of a host after the activation of the USB device connection status display function of the primary wireless USB interface extender.
FIG. 9 is an example of a block diagram of a wireless USB interface extender according to an embodiment of the disclosure.

### DETAILED DESCRIPTION OF THE INVENTION

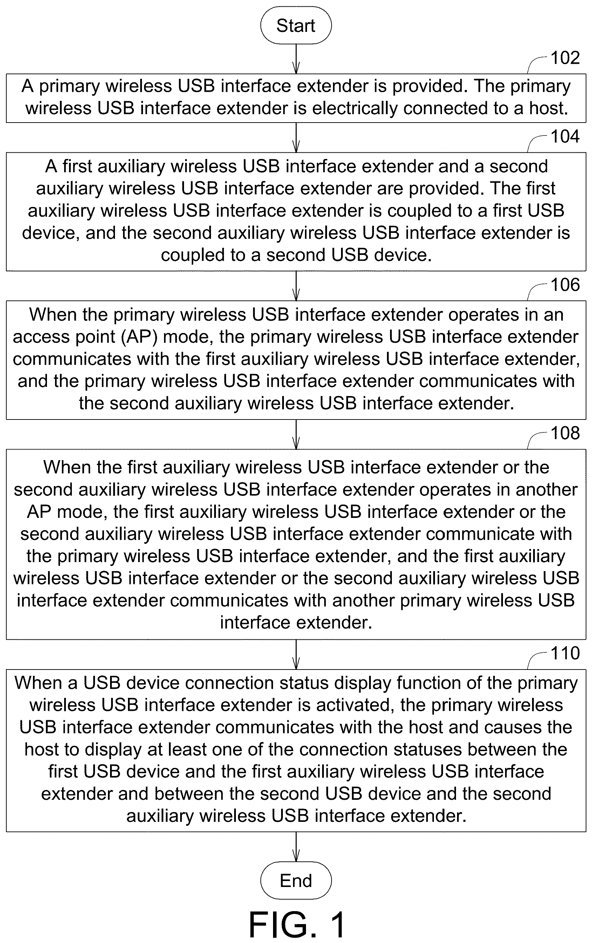

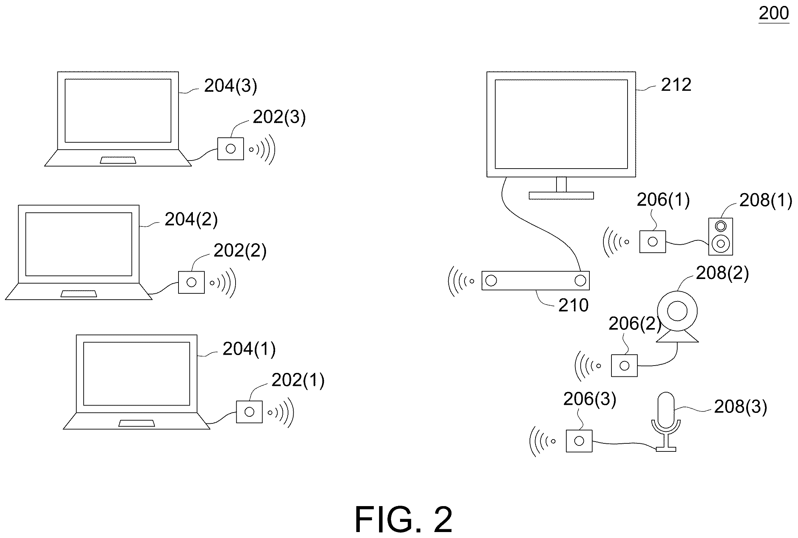

Refer to FIG. 1 and FIG. 2. FIG. 1 is a flowchart of an operating method for a wireless USB interface extender according to an embodiment of the disclosure. FIG. 2 is a block diagram of a wireless projection system 200 using the operating method for a wireless USB interface extender of FIG. 1 according to an embodiment of the disclosure. The operating method for the wireless USB interface extender includes the following steps. In step 102, a primary wireless USB interface extender 202(1) is provided, wherein the primary wireless USB interface extender 202(1) is electrically connected to a host 204(1). Next, the method proceeds to step 104, a first auxiliary wireless USB interface extender 206(1) and a second auxiliary wireless USB interface extender 206(2) are provided, wherein the first auxiliary wireless USB interface extender 206(1) is coupled to a first USB device 208(1), and the second auxiliary wireless USB interface extender 206(2) is coupled to a second USB device 208(2). Then, the method proceeds to step 106, when the primary wireless USB interface extender 202(1) operates in an access point (AP) mode, the primary wireless USB interface extender 202(1) communicates with the first auxiliary wireless USB interface extender 206(1), and the primary wireless USB interface extender 202(1) communicates with the second auxiliary wireless USB interface extender 206(2). Then, the method proceeds to step 108, when the first auxiliary wireless USB interface extender 206(1) or the second auxiliary wireless USB interface extender 206(2) operates in another AP mode, the first auxiliary wireless USB interface extender 206(1) or the second auxiliary wireless USB interface extender 206(2) communicates with the primary wireless USB interface extender 202(1), and the first auxiliary wireless USB interface extender 206(1) or the second auxiliary wireless USB interface extender 206(2) communicates with another primary wireless USB interface extender (such as the primary wireless USB interface extender 202(2) or 202(3)). After that, the method proceeds to step 110, when a USB device connection status display function of the primary wireless USB interface extender 202(1) is activated, the primary wireless USB interface extender 202(1) communicates with the host 204(1) and causes the host 204(1) to display at least one of the connection statuses between the first USB device 208(1) and the first auxiliary wireless USB interface extender 206(1) and between the second USB device 208(2) and the second auxiliary wireless USB interface extender 206(2).

Thus, the activation of the USB device connection status display function of the primary wireless USB interface extender 202(1) enables the host 204(1) to display the connection statuses between the first USB device 208(1) and the first auxiliary wireless USB interface extender 206(1) and between the second USB device 208(2) and the second auxiliary wireless USB interface extender 206(2), so that the user can easily determine whether the first USB device 208(1) and the second USB device 208(2) are connected successfully and are available for use. When the first USB device 208(1) and the second USB device 208(2) are a microphone, a speaker or a camera and are used in a conference room, the user does not need to check the physical connection statuses of the microphone, the speaker, and the camera with a number of wireless USB interface extenders. By activating the USB device connection status display function of the primary wireless USB interface extender 202(1), the user can determine whether the microphone, the speaker, and the camera are connected successfully. Thus, regardless whether the meeting starts or is being conducted and where the microphone, the speaker, and the camera are located, the user can quickly and conveniently confirm the connection statuses of the microphone, the speaker, and the camera with the wireless USB interface extenders, and use the microphone, the speaker, and the camera to facilitate the meeting process. Details are disclosed below.

Refer to FIG. 2 again. The wireless projection system 200 further includes primary wireless USB interface extenders 202(2) and 202(3), an auxiliary wireless USB interface extender 206(3), and a conversion device 210. The primary wireless USB interface extenders 202(2) and 202(3) are respectively coupled to the hosts 204(2) and 204(3). The conversion device 210 is coupled to a display device 212. The primary wireless USB interface extenders 202(1)~202(3) may individually operate in at least one of a workstation mode and an AP mode. When the primary wireless USB interface extenders 202(1)~202(3) operate in the workstation mode, the primary wireless USB interface extenders 202(1)~202(3) communicate with the conversion device 210. When the primary wireless USB interface extenders 202(1)~202(3) operate in the AP mode, the primary wireless USB interface extenders 202(1)~202(3) communicate with the auxiliary wireless USB interface extenders 206(1)~206(3). The auxiliary wireless USB interface extenders 206(1)~206(3) are individually coupled to at least one USB device. For instance, the auxiliary wireless USB interface extenders 206(1)~206(3) are respectively coupled to the USB devices 208(1)~208(3). The USB device may be a USB audio playback device (such as a speaker or an amplifier), a USB video capture device (such as a camera), or a USB audio capture device (such as a microphone). Let the USB devices 208(1)~208(3) be respectively a USB audio playback device (such as a speaker or an amplifier), a USB video capture device (such as a camera), and a USB audio capture device (such as a microphone).

The primary wireless USB interface extenders 202(1)~202(3) are equipped with wireless presentation system (WPS) function. Suppose the primary wireless USB interface extender 202(1) operates in the workstation mode. After the primary wireless USB interface extender 202(1) is activated, the primary wireless USB interface extender 202(1) that operates in the workstation mode is connected to the conversion device 210. Next, the primary wireless USB interface extender 202(1) that operates in the workstation mode transmits the audio and video (AV) signals of the host 204(1) to the conversion device 210, which then transmits the signals to the display device 212 to complete the screen-mirroring operation.

In terms of another aspect, when the primary wireless USB interface extender 202(1) operates in the AP mode, the primary wireless USB interface extender 202(1) communicates with at least one USB device coupled to at least one auxiliary wireless USB interface extender. The primary wireless USB interface extender 202(1) communicates with an operating system of the host 204(1) through a standard USB driver. By using the standard USB driver, the operating system identifies the at least one USB device as a USB device or a virtual USB device of the host and accesses the at least one USB device.

For instance, the auxiliary wireless USB interface extenders 206(1)~206(3) that operate in the workstation mode transmit the signals to the primary wireless USB interface extender 202(1) that operates in the AP mode. The primary wireless USB interface extender 202(1) that operates in the AP mode transmits the signals received from the USB devices to the host 204(1). The primary wireless USB interface extender 202(1) that operates in the AP mode may at the same time operate in the workstation mode and transmit the received signals to the conversion device 210 that operates in the AP mode, and then the conversion device 210 outputs the signals to the display device 212 for displaying.

In the AP mode, the function of a USB interface server (such as a USB hub server) is performed; in the workstation mode, and the function of a USB interface client (such as a USB hub client) is performed. The wireless USB interface extender may perform either or both of the functions of a USB interface server and a USB interface client. For illustration, the primary wireless USB interface extender 202(1) performs the function of a USB interface server, and the auxiliary wireless USB interface extenders 206(1)~206(3) perform the function of a USB interface client, for example.

When the primary wireless USB interface extender 202(1) operates as an access point, the primary wireless USB interface extender 202(1) is able to communicate with the operating system (by using a standard USB driver), and the operating system (such as a Windows operating system) identifies the primary wireless USB interface extender 202(1) as a standard USB device. For instance, the primary wireless USB interface extender 202(1) may set itself as a USB hub. After some USB devices are connected to the auxiliary wireless USB interface extenders 206(1)~206(3), these USB devices are regarded as being directly connected to a USB hub corresponding to the primary wireless USB interface extender 202(1), and the USB devices connected to the auxiliary wireless USB interface extenders 206(1)~206(3) are shown in the operating system. For instance, the operating system of the host 204(1) first identifies the primary wireless USB interface extender 202(1) used as a USB hub, then generates the USB devices 208(1)~208(3) after the USB hub.

When the primary wireless USB interface extender 202(1) operates as an access point, the primary wireless USB interface extender 202(1) may be set to an USB passthrough mode. That is, the primary wireless USB interface extender 202(1) does not need to generate a physical USB device on the operating system, wait for a USB device to be physically connected to the auxiliary wireless USB interface extenders 206(1)~206(3), and directly reflect the USB device coupled to the auxiliary wireless USB interface extenders 206(1)~206(3). For instance, when a USB video capture device is connected to the auxiliary wireless USB interface extender 206(2), the operating system directly generates a USB device corresponding to the USB video capture device. This is the USB passthrough mode.

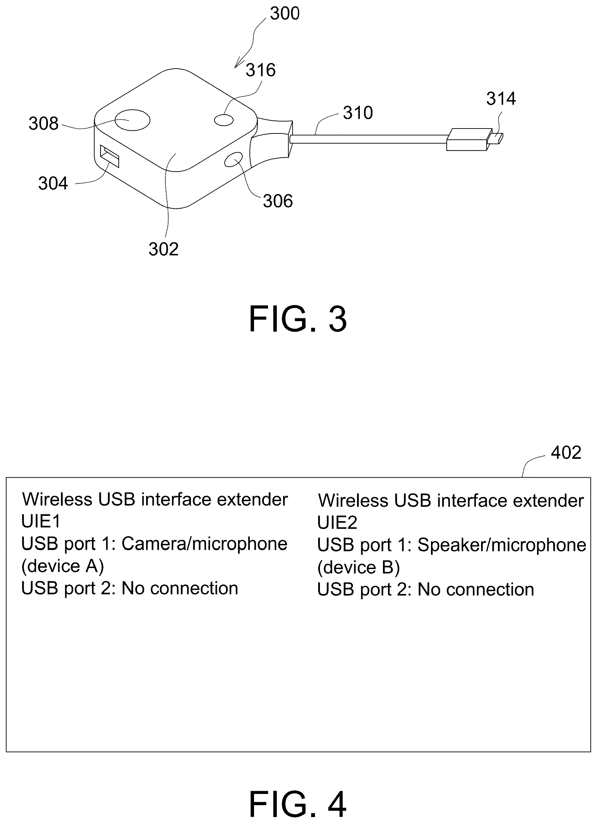

Referring to FIG. 3, a structural perspective view of a wireless USB interface extender according to an embodiment of the disclosure is shown. The primary wireless USB interface extender and the auxiliary wireless USB interface extender both may be implemented by the wireless USB interface extender 300 of FIG. 3. The wireless USB interface extender 300, for example, has a body 302, a wired input port 304, a pairing key 306, a projection key 308, a cable 310, a connector 314, and at least one special function key 316 (FIG. 3 illustrates only one special function key as an example). The wired input port 304 is located on a lateral side of the body 302 for receiving the connector of a USB device, so that the wireless USB interface extender 300 is coupled with a USB device. The pairing key 306 is located on another lateral side of the body 302, for example. When the pairing key 306 is pressed, the pairing operation between the wireless USB interface extender 300 and the conversion device 210 or between the wireless USB interface extender 300 and another wireless USB interface extender (such as the pairing operation between the primary wireless USB interface extender 202(1) and at least one of the auxiliary wireless USB interface extenders 206(1)~206(3)) may be activated. The projection key 308 is located on a top surface of the wireless USB interface extender 300. When the projection key 308 is pressed, the wireless projection function of the wireless USB interface extender 300 is activated, so that the frame outputted by the wireless USB interface extender 300 (such as the frame displayed on the screen of the host 204(1) or the frame captured by the USB device 208(2)) is transmitted to the display device 212 for displaying by the conversion device 210. The connector 314, such as a USB connector, is configured to be inserted into a USB slot, such as a USB slot of the host. When the connector 314 is inserted to the USB slot of the host and causes the connector 314 to be electrically connected to the host, the AV signals, data, and power outputted by the host are transmitted to the wireless USB interface extender 300 through the cable 310.

Details of the USB device connection status display function of the primary wireless USB interface extender are described below. The primary wireless USB interface extender 202(1) is exemplified in the following descriptions. The primary wireless USB interface extender 202(1) has a first special function key or a first composite key. The USB device connection status display function of the primary wireless USB interface extender 202(1) is activated by pressing the first special function key or the first composite key, or by operating a control interface displayed by the host 204(1). For instance, the first special function key may be implemented by a special function key 316. The first composite key is, for example, a combination of the pairing key 306 and the projection key 308. That is, the first composite key may be activated by pressing the pairing key 306 and the projection key 308 at the same time. The first composite key may be implemented by other combinations of the keys. That is, the primary wireless USB interface extender 202(1) may be configured to activate the USB device connection status display function when the user presses the special function key 316 of the primary wireless USB interface extender 202(1). Or, the primary wireless USB interface extender 202(1) may be configured to activate the USB device connection status display function when the user presses the pairing key 306 and the projection key 308 of the primary wireless USB interface extender 202(1) at the same time. Or, the primary wireless USB interface extender 202(1) may be configured to activate the USB device connection status display function when the user operates a control interface (not shown) displayed by the host 204(1) and selects the option "Activate the USB device connection status display function" on the control interface.

Referring to FIG. 4, an example of a frame being displayed on the screen of a host following the activation of the USB device connection status display function of the primary wireless USB interface extender is shown. After the USB device connection status display function of the primary wireless USB interface extender 202(1) is activated, the frame displayed on the screen of the host 204(1) may display the first USB device 208(1) connected to the first auxiliary wireless USB interface extender 206(1) and the second USB device 208(2) connected to the second auxiliary wireless USB interface extender 206(2). The display of the first USB device 208(1) connected to the first auxiliary wireless USB interface extender 206(1) indicates that the connection between the first USB device 208(1) and the first auxiliary wireless USB interface extender 206(1) is normal and that the first USB device 208(1) is in a normal operating state. The display of the second USB device 208(2) connected to the second auxiliary wireless USB interface extender 206(2) indicates that the connection between the second USB device 208(2) and the second auxiliary wireless USB interface extender 206(2) is normal and that the second USB device 208(2) is in a normal operating state.

As indicated in FIG. 4, the first auxiliary wireless USB interface extender 206(1) is designated as UIE1, the second auxiliary wireless USB interface extender 206(2) is designated as UIE2, and it is assumed that each auxiliary wireless USB interface extender includes at least two USB connection ports, which are a USB port 1 and a USB port 2, respectively. As indicated in FIG. 4, assume that in the first auxiliary wireless USB interface extender 206(1), only the USB port 1 is connected to a device A, which is equipped with both camera function and microphone function. Then, the USB port of the first auxiliary wireless USB interface extender 206(1) connected to a USB device and the functions of the USB device connected to the USB port are displayed on the left-hand side of the frame 402 of the host 204(1). For instance, "Wireless USB interface extender UIE1"; "USB port 1: camera/microphone (device A)"; "USB port 2: No connection" are displayed. Apart from the name of "device A", other information, such as the brand and the model of "device A", may also be displayed on the frame 402 of the host 204(1).

Besides, assume that in the second auxiliary wireless USB interface extender 206(2), only the USB port 1 is connected to a device B, which is equipped with both speaker function and microphone function. Then, the USB port of the second auxiliary wireless USB interface extender 206(2) that is connected to a USB device and the functions of the connected device are displayed on the right-hand side of the frame 402 of the host 204(1). For instance, "Wireless USB interface extender UIE2", "USB port 1: speaker/microphone (device B)"; "USB port 2: No connection". Apart from the name of "device B", other information, such as the brand and the model of "device B", may also be displayed on the frame 402 of the host 204(1).

In an embodiment, the frame 402 of the host 204(1) displays for a period of time (such as a few seconds) then switches to other frame of the host 204(1), such as the frame of the operating system or application program of the host 204(1) or the frame of the image captured by the camera of the device A connected to the USB port 1 of the first auxiliary wireless USB interface extender 206(1). Next time when the USB device connection status display function of the primary wireless USB interface extender 202(1) is activated, the frame 402 is displayed again.

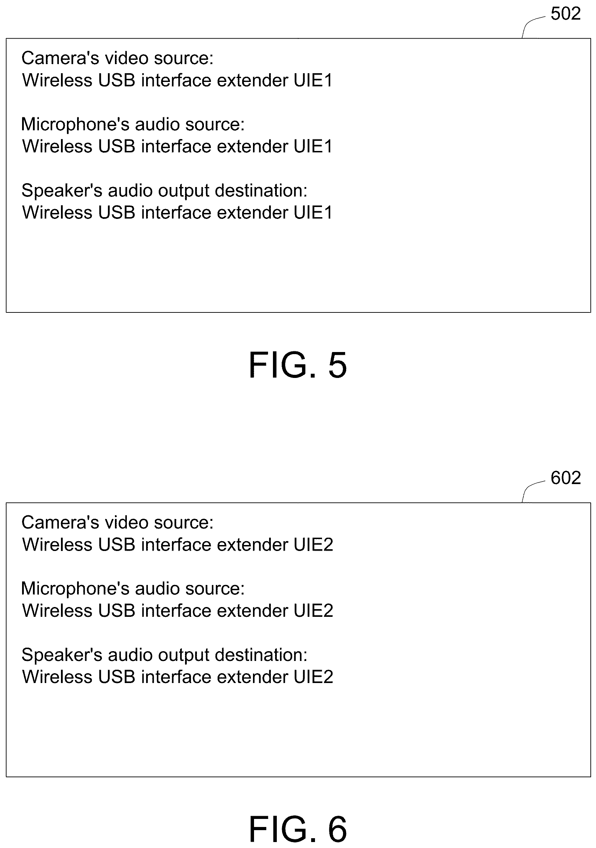

Referring to FIG. 5, another example of a frame being displayed on the screen of a host following the activation of the USB device connection status display function of the primary wireless USB interface extender is shown. The primary wireless USB interface extender 202(1) further has a second special function key or a second composite key. By triggering the second special function key or the second composite key of the primary wireless USB interface extender 202(1), a USB signal source of the host 204(1) is set to the first USB device 208(1). By operating a control interface displayed by the host 204(1), a USB signal source of the host is set to the first USB device 208(1). Since the first USB device 208(1) is connected to the first auxiliary wireless USB interface extender 206(1), that is, the wireless USB interface extender UIE1, the frame 502 of the host 204(1) displays the source of external signals corresponding to the wireless USB interface extender UIE1, and the signals of the host 204(1) are outputted to the wireless USB interface extender UIE1. For instance, the frame 502 of the host 204(1) displays "Camera's video source: Wireless USB interface extender UIE1"; "Microphone's audio source: Wireless USB interface extender UIE1"; "Speaker's audio output destination: Wireless USB interface extender UIE1".

The second special function key may be implemented by another special function key different from the first special function key. The second composite key may be implemented by other combinations of the keys different from the combination of the first composite key. For instance, the second composite key may be a combination of the first special function key plus the pairing key, a combination of the first special function key plus the projection key, or other combinations of the keys. As indicated in the embodiment of FIG. 5, an external USB signal source of the host 204(1) and the transmission destination of the signals generated by the host 204(1) are set to correspond to the same auxiliary wireless USB interface extender (such as the first auxiliary wireless USB interface extender 206(1), that is, the wireless USB interface extender UIE1).

Referring to FIG. 6, an alternate example of a frame being displayed on the screen of a host following the activation of the USB device connection status display function of the primary wireless USB interface extender is shown. Following the frame of FIG. 5, by triggering the second special function key or the second composite key of the primary wireless USB interface extender 202(1), the user switches the USB signal source of the host 204(1) to the second USB device 208(2) from the first USB device 208(1). Or, by operating the control interface displayed by the host 204(1), the user switches the USB signal source of the host to the second USB device 208(2) from the first USB device 208(1). Since the second USB device 208(2) is connected to the second auxiliary wireless USB interface extender 206(2), that is, the wireless USB interface extender UIE2, the frame 602 of the host 204(1) displays the source of external signals corresponding to the wireless USB interface extender UIE2, and the signals of the host 204(1) are outputted to the wireless USB interface extender UIE2. For instance, the frame 602 displays "Camera's video source: Wireless USB interface extender UIE2"; "Microphone's audio source: Wireless USB interface extender UIE2"; "Speaker's audio output destination: Wireless USB interface extender UIE2".

The embodiment of FIG. 6 shows the situation that an external USB signal source of the host 204(1) and the transmission destination of the signals generated by the host 204(1) are set to correspond to the same auxiliary wireless USB interface extender (such as the second auxiliary wireless USB interface extender 206(2), that is, the wireless USB interface extender UIE2).

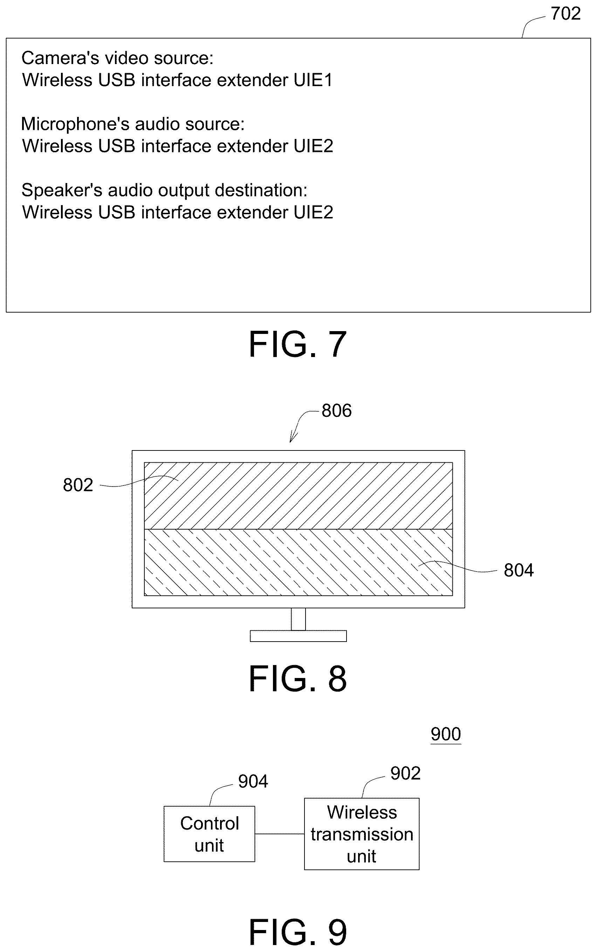

Referring to FIG. 7, an alternate example of a frame displayed on the screen of a host after the activation of the USB device connection status display function of the primary wireless USB interface extender is shown. The primary wireless USB interface extender 202(1) further has a third special function key or a third composite key. By triggering the third special function key or the third composite key of the primary wireless USB interface extender 202(1), the user further sets a first type USB signal source of the host 204(1) to the first USB device 208(1), and the user further sets a second type USB signal source of the host 204(1) to the second USB device 208(2). Or, by operating a control interface displayed by the host 204(1), the user sets the first type USB signal source of the host 204(1) to the first USB device 208(1), and the user sets the second type USB signal source of the host 204(1) to the second USB device 208(2).

The third special function key may be implemented by another special function key different from the first special function key and the second special function key. The combination of the third composite key may be implemented by other combinations of the keys different from the combination of the first composite key and the combination of the second composite key. For instance, the third composite key may be implemented by a combination of the second special function key plus the pairing key, a combination of the second special function key plus the projection key, or other combinations of the keys. As indicated in the embodiment of FIG. 7, an external first type USB signal source of the host 204(1) and an external second type USB signal source of the host 204(1) are set to correspond to different auxiliary wireless USB interface extenders (such as the first auxiliary wireless USB interface extender 206(1) and the second auxiliary wireless USB interface extender 206(2), respectively, that is, the wireless USB interface extenders UIE1 and UIE2). The first type USB signal may be camera's video. The second type USB signal may be microphone's audio. The transmission destination of the signals generated by the host 204(1) may be identical to the first type USB signal source or the second type USB signal source. Or, the transmission destination of the signals generated by the host 204(1) may be different from the first type USB signal source or the second type USB signal source. For instance, the frame 702 displays "Camera's video source: Wireless USB interface extender UIE1"; "Microphone's audio source: Wireless USB interface extender UIE2"; "Speaker's audio output destination: Wireless USB interface extender UIE2".

By triggering the third special function key or the third composite key of the primary wireless USB interface extender 202(1), the first type USB signal source of the host 204(1) is set to other USB devices, and the second type USB signal source of the host 204(1) is set to other USB devices. As indicated in the embodiment of FIG. 7, the signal sources of different types of USB signals of the host are set to different USB devices. Or, the external USB signal source of the host and the transmission destination of the signals outputted by the host are set to different USB devices.

Referring to FIG. 8, an example of multiple image signals integrated and displayed on the screen of a host after the activation of the USB device connection status display function of the primary wireless USB interface extender is shown. The primary wireless USB interface extender 202(1) further has a fourth special function key or a fourth composite key, for example. By triggering the fourth special function key or the fourth composite key of the primary wireless USB interface extender 202(1), the user integrates a first USB signal of the first USB device 208(1) with a second USB signal of the second USB device 208(2). Or, by operating a control interface displayed by the host 204(1), the user integrates the first USB signal of the first USB device 208(1) with the second USB signal of the second USB device 208(1). For instance, the first USB signal (such as the first AV signal 802) of the first USB device 208(1) and the second USB signal (such as the second AV signal 804) of the second USB device 208(2) are integrated to generate an integrated frame 806, which is then displayed on the display screen of the host 204(1). In the integrated frame 806, the first USB signal (such as the first AV signal 802) is displayed on the upper part and the second USB signal (such as the second AV signal 804) is displayed on the lower part. However, the present embodiment is not limited thereto. The first USB signal (such as the first AV signal 802) may be displayed on the lower part, left-hand part, or right-hand part of the integrated frame 806, and the second USB signal (such as the second AV signal 804) may be displayed on the upper part, right-hand part, or left-hand part of the integrated frame 806. Or, the first USB signal (such as the first AV signal 802) and the second USB signal (such as the second AV signal 804) may be displayed in a picture-in-picture (PiP) mode.

The fourth special function key may be another special function key different from the first special function key, the second special function key, and the third special function key. The fourth composite key may be other combinations different from the combination of the first composite key, the combination of the second composite key, and the combination of the third composite key. For instance, the fourth composite key may be a combination of the third special function key plus the pairing key, a combination of the third special function key plus the projection key, or other combinations of the keys.

In an embodiment, an operating method for the wireless USB interface extender further includes the following steps. A conversion device 210 is provided, wherein the conversion device 210 is coupled to the display device 212. The primary wireless USB interface extender 202(1) communicates with the conversion device 210. By logging in to a management interface of the conversion device 210, a USB signal source is set to be the first USB device 208(1) or the second USB device 208(2). Relevant information of the first USB device 208(1) and the second USB device 208(2) are transmitted to the conversion device 210 through the primary wireless USB interface extender 202(1).

Thus, when the user performs setting through the management interface of the conversion device 210, there is no need to perform setting on the control interface of the host.

Referring to FIG. 9, an example of a block diagram of a wireless USB interface extender according to an embodiment of the disclosure is shown. The wireless USB interface extender 900 includes a wireless transmission unit 902 and a control unit 904. The control unit 904 is configured to control the wireless transmission unit 902. The control unit 904 further causes the wireless transmission unit 902 to operate in an AP mode. The wireless USB interface extender 900 is electrically connected to a host. When the wireless transmission unit 902 operates in the AP mode, the wireless transmission unit 902 communicates with a first auxiliary wireless USB interface extender, and the wireless transmission unit 902 communicates with a second auxiliary wireless USB interface extender. The first auxiliary wireless USB interface extender is coupled to a first USB device, and the second auxiliary wireless USB interface extender is coupled to a second USB device. When a USB device connection status display function of the wireless USB interface extender 900 is activated, the control unit 904 communicates with the host and causes the host to display at least one of the connection statuses between the first USB device and the first auxiliary wireless USB interface extender and between the second USB device and the second auxiliary wireless USB interface extender.

In another embodiment, the method for displaying current status (the connection status between a USB device and a corresponding auxiliary wireless USB interface extender) of the USB device (such as a USB peripheral device) on the screen of a host (or a user's notebook) may be performed as follows. The information "Current status of USB peripheral device" of the USB device connected to the first auxiliary USB interface extender may be transmitted to the primary wireless USB interface extender along with the camera image (camera image can be treated with image composition processing, such as image-overlay processing, or converted into video image streaming data) of the USB device (such as a USB camera). The primary wireless USB interface extender receives the connection statuses between the first auxiliary wireless USB interface extender and the USB device connected thereto and between the second auxiliary wireless USB interface extender and the USB device connected thereto from the first auxiliary wireless USB interface extender and the second auxiliary wireless USB interface extender, respectively (current status of USB peripheral device), then performs image composition processing on the received images, such as the images transmitted by the first auxiliary wireless USB interface extender and the second auxiliary wireless USB interface extender. Then, the primary wireless USB interface extender and the host (such as a notebook) display the composited image according to the general communication protocol provided by a pre-installed universal driver, such as a USB camera driver or an imaging-device driver. Thus, by activating the camera status display function of video software (such as Zoom or Teams), "Current status of USB peripheral device" of the first USB device currently connected to the first auxiliary wireless USB interface extender and the second USB device currently connected to the second auxiliary USB interface extender can be displayed. That is, the connection statuses between the first USB device and the first auxiliary wireless USB interface extender and between the second USB device and the second auxiliary wireless USB interface extender can by displayed by using the camera status display function of video software (such as an option related to the camera in the video software).

According to an operating method for the wireless USB interface extender and the wireless USB interface extender using the same of an embodiment of the disclosure, by activating the USB device connection status display function of the wireless USB interface extender, the host connected to the wireless USB interface extender displays the connection status between multiple USB devices and corresponding wireless USB interface extenders, so that the user can easily determine whether the USB devices are connected successfully and are available for use. When multiple USB devices, including a microphone, a speaker, and a camera, are used in a conference room, the user does not need to check the physical connection statuses of the microphone, speaker or camera with the wireless USB interface extenders. By activating the USB device connection status display function of the wireless USB interface extender, the user can determine whether the microphone, speaker, and camera are connected successfully according to the message displayed on the frame of the host connected to the wireless USB interface extender without having to check the USB devices one by one to determine whether the USB devices are physically connected to corresponding wireless USB interface extenders. Thus, before the meeting starts or is being conducted, regardless where the microphone, speaker, and camera are located, the user can quickly and conveniently confirm the connection statuses of the microphone, speaker and camera with multiple wireless USB interface extenders, and use the microphone, speaker, and camera to facilitate the meeting process.

Besides, by triggering a corresponding special function key or composite key on the wireless USB interface extender or by operating a control interface, the user can quickly switch the USB device to the one corresponding to the signal source and to the one where the signals will be outputted. It is very convenient.

Moreover, multiple USB devices are connected to one or multiple hosts through the wireless USB interface extender, and the wireless USB interface extender also can display integrated AV signals of multiple USB devices. Thus, the host enables the user to receive AV signals clearly and directly from multiple USB devices. Additionally, different hosts can share multiple USB devices, thereby effectively increasing the effectiveness and convenience of meetings without performing repeated plugging and unplugging actions.

While the invention has been described by way of example and in terms of the preferred embodiment (s), it is to be understood that the invention is not limited thereto. Based on the technical features embodiments of the present invention, a person ordinarily skilled in the art will be able to make various modifications and similar arrangements and procedures without breaching the spirit and scope of protection of the invention. Therefore, the scope of protection of the present invention should be accorded with what is defined in the appended claims.

## Claims

1. An operating method for a wireless USB interface extender, comprising:
providing a primary wireless USB interface extender (202(1) to 202(3)), wherein the primary wireless USB interface extender (202(1) to 202(3)) is electrically connected to a host (204(1) to 204(3));
providing a first auxiliary wireless USB interface extender (206(1)) and a second auxiliary wireless USB interface extender (206(2)), wherein the first auxiliary wireless USB interface extender (206(1)) is coupled to a first USB device (208(1)), and the second auxiliary wireless USB interface extender (206(2)) is coupled to a second USB device (208(2));
when the primary wireless USB interface extender (202(1) to 202(3)) operates in an access point (AP) mode, communicating with the first auxiliary wireless USB interface extender (206(1)) by the primary wireless USB interface extender (202(1) to 202(3)), and communicating with the second auxiliary wireless USB interface extender (206(2)) by the primary wireless USB interface extender (202(1) to 202(3));
when the first auxiliary wireless USB interface extender (206(1)) or the second auxiliary wireless USB interface extender (206(2)) operates in another AP mode, communicating with the primary wireless USB interface extender (202(1) to 202(3)) by the first auxiliary wireless USB interface extender (206(1)) or by the second auxiliary wireless USB interface extender (206(2)), and communicating with another primary wireless USB interface extender (202(1) to 202(3)) by the first auxiliary wireless USB interface extender (206(1)) or by the second auxiliary wireless USB interface extender (206(2)); and
when a USB device connection status display function of the primary wireless USB interface extender (202(1) to 202(3)) is activated, communicating with the host (204(1) to 204(3)) and causing the host (204(1) to 204(3)) to display at least one of the connection statuses between the first USB device (208(1)) and the first auxiliary wireless USB interface extender (206(1)) and between the second USB device (208(2)) and the second auxiliary wireless USB interface extender (206(2)) by the primary wireless USB interface extender (202(1) to 202(3)).

2. The operating method according to claim 1, wherein the primary wireless USB interface extender (202(1) to 202(3)) has a first special function key or a first composite key, the USB device connection status display function of the primary wireless USB interface extender (202(1) to 202(3)) is activated by triggering the first special function key or the first composite key or by operating a control interface displayed by the host (204(1) to 204(3)).

3. The operating method according to claim 1, wherein the primary wireless USB interface extender (202(1) to 202(3)) has a second special function key or a second composite key, and the method further comprises:
setting a USB signal source of the host (204(1) to 204(3)) to the first USB device (208(1)) by triggering the second special function key or the second composite key of the primary wireless USB interface extender (202(1) to 202(3)) or setting the USB signal source of the host (204(1) to 204(3)) to the first USB device (208(1)) by operating a control interface displayed by the host (204(1) to 204(3)).

4. The operating method according to claim 3, further comprising:
setting the USB signal source of the host (204(1) to 204(3)) to the second USB device (208(2)) from the first USB device (208(1)) by triggering the second special function key or the second composite key of the primary wireless USB interface extender (202(1) to 202(3)), or switching the USB signal source of the host (204(1) to 204(3)) to the second USB device (208(2)) from the first USB device (208(1)) by operating the control interface displayed by the host (204(1) to 204(3)).

5. The operating method according to claim 1, wherein the primary wireless USB interface extender (202(1) to 202(3)) further has a third special function key or a third composite key, and the method further comprises:
setting a first type USB signal source of the host (204(1) to 204(3)) to the first USB device (208(1)) and setting a second type USB signal source of the host (204(1) to 204(3)) to the second USB device (208(2)) by triggering the third special function key or the third composite key of the primary wireless USB interface extender (202(1) to 202(3)), or setting the first type USB signal source of the host (204(1) to 204(3)) to the first USB device (208(1)) and setting the second type USB signal source of the host (204(1) to 204(3)) to the second USB device (208(2)) by operating a control interface displayed by the host (204(1) to 204(3)).

6. The operating method according to claim 1, wherein the primary wireless USB interface extender (202(1) to 202(3)) further has a fourth special function key or a fourth composite key, and the method further comprises:
integrating a first USB signal of the first USB device (208(1)) with a second USB signal of the second USB device (208(2)) by triggering the fourth special function key or the fourth composite key of the primary wireless USB interface extender (202(1) to 202(3)), or integrating the first USB signal of the first USB device (208(1)) with the second USB signal of the second USB device (208(2)) by operating a control interface displayed by the host (204(1) to 204(3)).

7. The operating method according to claim 1, further comprising:
providing a conversion device (210), wherein the conversion device (210) is coupled to a display device (212); and
communicating with the conversion device (210) by the primary wireless USB interface extender (202(1) to 202(3)), setting a USB signal source to the first USB device (208(1)) or the second USB device (208(2)) by logging in to a management interface of the conversion device (210), wherein relevant information of the first USB device (208(1)) and the second USB device (208(2)) are transmitted to the conversion device (210) through the primary wireless USB interface extender (202(1) to 202(3)).

8. A wireless USB interface extender (202(1) to 202(3), 206(1) to 206(3), 300, 900), comprising:
a wireless transmission unit (902); and
a control unit (904), configured to control the wireless transmission unit (902), wherein the control unit (904) is further configured to cause the wireless transmission unit (902) to operate in an AP mode;
wherein the wireless USB interface extender (202(1) to 202(3), 206(1) to 206(3), 300, 900) is configured to be electrically connected to a host (204(1) to 204(3));
wherein when the wireless transmission unit (902) operates in the AP mode, the wireless transmission unit (902) communicates with a first auxiliary wireless USB interface extender (206(1)), and the wireless transmission unit (902) communicates with a second auxiliary wireless USB interface extender (206(2)), the first auxiliary wireless USB interface extender (206(1)) is coupled to a first USB device (208(1)), and the second auxiliary wireless USB interface extender (206(2)) is coupled to a second USB device (208(2));
wherein when a USB device connection status display function of the wireless USB interface extender (202(1) to 202(3), 206(1) to 206(3), 300, 900) is activated, the control unit (904) communicates with the host (204(1) to 204(3)) and causes the host (204(1) to 204(3)) to display at least one of the connection statuses between the first USB device (208(1)) and the first auxiliary wireless USB interface extender (206(1)) and between the second USB device (208(2)) and the second auxiliary wireless USB interface extender (206(2)).

9. The wireless USB interface extender (202(1) to 202(3), 206(1) to 206(3), 300, 900) according to claim 8, wherein the wireless USB interface extender (202(1) to 202(3), 206(1) to 206(3), 300, 900) further has a first special function key or a first composite key, the USB device connection status display function of the wireless USB interface extender (202(1) to 202(3), 206(1) to 206(3), 300, 900) is activated by triggering the first special function key or the first composite key or by operating a control interface displayed by the host (204(1) to 204(3)).

10. The wireless USB interface extender (202(1) to 202(3), 206(1) to 206(3), 300, 900) according to claim 8, wherein the wireless USB interface extender (202(1) to 202(3), 206(1) to 206(3), 300, 900) has a second special function key or a second composite key, by triggering the second special function key or the second composite key of the wireless USB interface extender (202(1) to 202(3), 206(1) to 206(3), 300, 900), a USB signal source of the host (204(1) to 204(3)) is set to the first USB device (208(1)), or by operating a control interface displayed by the host (204(1) to 204(3)), the USB signal source of the host (204(1) to 204(3)) is set to the first USB device (208(1)).

11. The wireless USB interface extender (202(1) to 202(3), 206(1) to 206(3), 300, 900) according to claim 10, wherein by triggering the second special function key or the second composite key of the wireless USB interface extender (202(1) to 202(3), 206(1) to 206(3), 300, 900), the USB signal source of the host (204(1) to 204(3)) is switched to the second USB device (208(2)) from the first USB device (208(1)), or by operating the control interface displayed by the host (204(1) to 204(3)), the USB signal source of the host (204(1) to 204(3)) is switched to the second USB device (208(2)) from the first USB device (208(1)).

12. The wireless USB interface extender (202(1) to 202(3), 206(1) to 206(3), 300, 900) according to claim 8, wherein the wireless USB interface extender (202(1) to 202(3), 206(1) to 206(3), 300, 900) further has a third special function key or a third composite key, by triggering the third special function key or the third composite key of the wireless USB interface extender (202(1) to 202(3), 206(1) to 206(3), 300, 900), a first type USB signal source of the host (204(1) to 204(3)) is set to the first USB device (208(1)) and a second type USB signal source of the host (204(1) to 204(3)) is set to the second USB device (208(2)), or by operating a control interface displayed by the host (204(1) to 204(3)), the first type USB signal source of the host (204(1) to 204(3)) is set to the first USB device (208(1)) and the second type USB signal source of the host (204(1) to 204(3)) is set to the second USB device (208(2)).

13. The wireless USB interface extender (202(1) to 202(3), 206(1) to 206(3), 300, 900) according to claim 8, wherein the wireless USB interface extender (202(1) to 202(3), 206(1) to 206(3), 300, 900) further has a fourth special function key or a fourth composite key, by triggering the fourth special function key or the fourth composite key of the wireless USB interface extender (202(1) to 202(3), 206(1) to 206(3), 300, 900), a first USB signal of the first USB device (208(1)) and a second USB signal of the second USB device (208(2)) are integrated, or by operating a control interface displayed by the host (204(1) to 204(3)), the first USB signal of the first USB device (208(1)) and the second USB signal of the second USB device (208(2)) are integrated.

14. The wireless USB interface extender (202(1) to 202(3), 206(1) to 206(3), 300, 900) according to claim 8, wherein the wireless USB interface extender (202(1) to 202(3), 206(1) to 206(3), 300, 900) is configured to communicate with a conversion device (210) coupled to a display device (212), by logging in to a management interface of the conversion device (210), a USB signal source is set to the first USB device (208(1)) or the second USB device (208(2)), the control unit (904) transmits relevant information of the first USB device (208(1)) and the second USB device (208(2)) to the conversion device (210) through the wireless transmission unit (902).
